# EUROPEAN PATENT APPLICATION

(11) **EP 3 723 235 A2**
(43) Date of publication of application: **14.10.2020**
(21) Application number: 20160079.8
(22) Date of filing: 28.02.2020
(51) Int. Cl.: H02J 7/34

(54) **PROTECTION DEVICE AND METHOD FOR SUPERCAPACITOR OF POWER SUPPLY SYSTEM OF VEHICLE**

(30) Priority: 16.03.2019 TW 108109203
(71) Applicant: Reduce Carbon Energy Develop Co., Ltd., New Taipei City 238 (TW)
(72) Inventor: CHEN, Fu-Chieh, New Taipei City 238 (TW)
(74) Representative: Brown, Michael Stanley

(57) **Abstract**

A protection device (10) for a supercapacitor (30) of a power supply system (1) of vehicle, the power supply system (1) including a rechargeable battery (20), the supercapacitor (30), and a power generator (40). The protection device (10) contains a first voltage detector (11), a second voltage detector (12), a temperature detector (13), a processing unit (14), a control unit (15), a communication unit (16), and an alarm (18). The first voltage detector (11) is coupled with the rechargeable battery (20) to detect and send a voltage value of the rechargeable battery (20) to the processing unit (14). The second voltage detector (12) is coupled with the supercapacitor (30) to detect and send a voltage value of the supercapacitor (30) to the processing unit (14). The temperature detector (12) is coupled with the supercapacitor (30) to detect and send a temperature value of the supercapacitor (30) to the processing unit (14). The control unit (15) includes a first transistor (152) and a second transistor (154) which are connected in series, and the first transistor (152) and the second transistor (154) are Metal-Oxide-Semiconductor Field-Effect Transistor (MOSFET).

## Description

### FIELD OF THE INVENTION

The present invention relates to a power supply system of vehicle having a supercapacitor, and more particularly to a protection device and method for the supercapacitor of the power supply system of the vehicle, wherein the protection method is executed by the protection device.

### BACKGROUND OF THE INVENTION

A start-stop system is applied to reduce fuel consumption, exhaust emission, and control stopping and starting of an engine of vehicle. For example, when the vehicle stalls idly, the engine stops automatically. When the vehicle starts after stalling, the engine operates automatically. When the vehicle stops at a red light, the engine stalls automatically, thus reducing the fuel consumption and the exhaust emission.

After starting the engine of the vehicle, currents are outputted to the batteries so that the motor drives the engine to operate, and the engine actuates a power generator to produce electric energy, and the electric energy store in the batteries. Conventionally, the batteries are lead-acid batteries, and lithium batteries are used as rechargeable batteries at present. When the vehicle has the start-stop system, the engine stalls and starts repeatedly by using the start-stop system when the vehicles are running, such that the batteries outputs currents to drive the motor to run, but a service life of the batteries reduces quickly.

Due to climate changes, the ambient temperature in winter in European and American countries is often below -(10) °C. Thus, it is difficult to start the vehicle (such as gasoline/diesel cars or motorcycles) in a low temperature by ways of conventional batteries.

To overcome such problems, an improved power supply system of the vehicle has been developed, wherein the power supply system contains a rechargeable battery, a supercapacitor, and a power generator. The rechargeable battery is configured to charge and discharge and is a lead-acid battery or a lithium battery. The rechargeable battery is connected with the supercapacitor in parallel, wherein the rechargeable battery and the supercapacitor are configured to start a motor for driving the engine and the electrical equipment (such as a mobile computer, audio equipment, and an air conditioner) of the vehicle. The power generator is coupled with the rechargeable battery and the supercapacitor, and the power generator is driven by the engine to operate and to supply the power to the rechargeable battery and supercapacitor. In addition, the rechargeable battery supplies the power to the supercapacitor.

The power supply system supplies electric energy to the motor by using the supercapacitor, hence the supercapacitor has high power density, short charge and discharge time, long service life, and wide working range so as to drive the motor to operate in high torque and large currents. The supercapacitor is charged in a short time after discharging to enhance operation of the engine after the vehicle stalls. It solves the problem of using lead-acid batteries or secondary lithium batteries as the power for starting the engine, and avoiding rapid loss of the service life of lead-acid batteries or secondary lithium batteries.

Preferably, the supercapacitor charges and discharges in a low temperature (such as within -(40) °C to 70 °C) so as to supply the power to the motor, and the motor drives the engine to operate.

However, a withstand voltage value of the supercapacitor is limited, for example, when the voltage of the supercapacitor is more than the withstand voltage value, the supercapacitor is broken easily. Furthermore, when a temperature of the supercapacitor is extremely high, the supercapacitor is broken quickly. The charging of the supercapacitor affects the voltage and temperature of the supercapacitor. After the supercapacitor is damage, the voltage of the supercapacitor is measured manually.

The present invention has arisen to mitigate and/or obviate the afore-described disadvantages.

### SUMMARY OF THE INVENTION

The primary objective of the present invention is to provide a protection device for a supercapacitor of a power supply system of vehicle which is capable of avoiding being damaged by controlling discharging and charging of the supercapacitor.

Another primary objective of the present invention is to provide a protection method for a supercapacitor of a power supply system of vehicle which is executed by the protection device.

To obtain the above objectives, a protection device for a supercapacitor of a power supply system of vehicle provided by the present invention, the power supply system including a rechargeable battery, the supercapacitor, and a power generator.

The rechargeable battery is in connection with the supercapacitor n parallel, the power generator is coupled with the rechargeable battery and the supercapacitor, and the protection device is coupled with the rechargeable battery and the supercapacitor.

The protection device contains a first voltage detector, a second voltage detector, a temperature detector, a processing unit, a control unit, a communication unit, and an alarm. The first voltage detector, the second voltage detector, the temperature detector, the control unit, the communication unit, and the alarm are coupled with the processing unit. The first voltage detector is coupled with the rechargeable battery to detect and send a voltage value of the rechargeable battery to the processing unit. The second voltage detector is coupled with the supercapacitor to detect and send a voltage value of the supercapacitor to the processing unit. The temperature detector is coupled with the supercapacitor to detect and send a temperature value of the supercapacitor to the processing unit. The processing unit is a microprocessor and is configured to send a control signal to the control unit based on the voltage value and the temperature value of the supercapacitor so that the control unit controls a charging and a discharging of the supercapacitor. The communication unit is a Bluetooth communicator and is configured to send and receive a Bluetooth signal, and the processing unit sends the Bluetooth signal to an external communication device via the communication unit, and the alarm is a light-emitting diode (LED) warning lamp.

The control unit includes a first transistor and a second transistor which are connected in series, and a back surface of the first transistor contacts with a back surface of the second transistor. In addition, the first transistor and the second transistor are Metal-Oxide-Semiconductor Field-Effect Transistor (MOSFET).

The protection device further contains a battery judging unit, and the battery judging unit is coupled with the processing unit and is configured to detect and judge a type and a specification of the rechargeable battery. The battery judging unit sends a judged signal to the processing unit so as to set a relaxation voltage of the rechargeable battery.

A protection method executed by the protection device contains steps of:
1) pre-checking the supercapacitor, wherein the control unit is in a completely off mode, and the processing unit judges whether the supercapacitor is normal based on a flag of the supercapacitor;
   wherein when the supercapacitor is abnormal, the control unit is in the completely off mode, and the alarm emits warning lights; when the supercapacitor is normal, a power capacity of the supercapacitor is tested;
2) testing the power capacity of the supercapacitor, wherein the voltage value of the supercapacitor is compared with a first safe voltage value; when the voltage value of the supercapacitor is less than the first safe voltage value, the voltage value of the supercapacitor is detected and is compared with the first safe voltage value successively; when the voltage value of the supercapacitor is equal to or is more than the first safe voltage value, a voltage balance is executed;
3) producing the voltage balance, wherein the control unit is in a complete on mode, and the rechargeable battery and the supercapacitor charge and discharge to each other so as to produce the voltage balance;
4) judging whether an engine is running, wherein the voltage value of the rechargeable battery is compared with the relaxation voltage of the rechargeable battery;
   wherein when the voltage value of the rechargeable battery is more than the relation voltage, the engine is running to execute an overcharge protection; when the voltage value of the rechargeable battery is less than the relation voltage, the engine stops to execute a second over-temperature protection;
5) executing the overcharge protection, wherein when the voltage value of the supercapacitor is more than a second safe voltage value, the control unit is in a complete discharging mode, and the voltage value of the supercapacitor is compared with the second safe voltage value continuously; when the voltage value of the supercapacitor is equal to or is less than the second safe voltage value, the control unit is in the completely on mode, and a first over-temperature protection is executed;
6) executing the first over-temperature protection, wherein when the temperature value of the supercapacitor is more than a safe temperature value, the control unit is in the complete discharging mode, the temperature value of the supercapacitor is compared with the safe temperature value; when the temperature value of the supercapacitor is equal to or is less than the safe temperature value, the control unit is in the completely on mode, and the voltage balance is executed;
7) executing the second over-temperature protection, wherein when the temperature value of the supercapacitor is more than the safe temperature value, the control unit is in the complete discharging mode, the temperature value of the supercapacitor is compared with the safe temperature value successively; when the temperature value of the supercapacitor is equal to or is less than the safe temperature value, the control unit is in the completely on mode;
8) determining whether executing the capacitance test, wherein when the second over-temperature protection is executed, and the control unit is in the completely on mode, the processing unit starts a timer and detects whether the engine is running;
   wherein when the engine stops for a period of predetermined starting time, the capacitance test is executed;
   wherein when a stopping time of the engine is less than the starting time, the voltage balance is executed;
9) executing the capacitance test, wherein the voltage value of the rechargeable battery is compared with the voltage value of the supercapacitor after the control unit is in the completely off mode for 5 seconds, and a difference between the voltage value of the rechargeable battery and the voltage value of the supercapacitor is a voltage difference value;
   wherein when the voltage difference value is less than or is equal to 0.5 V, the control unit is in the completely on mode so as to stop the capacitance test and to execute the voltage balance;
   wherein when the voltage difference value is more than 0.5 V, the processing unit records abnormal conditions, and a time of the abnormal conditions is accumulated and is compared with a predetermined warning time;
   wherein when the time of the abnormal conditions is less than or is equal to the predetermined warning time, the control unit is in the completely on mode after the processing unit starts the timer for (10) seconds so as to stop the capacitance test and to execute the voltage balance; and
   wherein when the time of the abnormal conditions is more than the predetermined warning time, the processing unit records the flag of the supercapacitor is abnormal, the control unit is in the completely off mode continuously, and the alarm emits the warning lights.

When the engine stops, the control signal is sent to the communication unit by ways of the external communication device to execute the capacitance test.

Preferably, when the protection device executes the overcharge protection, the first over-temperature protection, and the second over-temperature protection, raising of the voltage value and the temperature value and of the supercapacitor is avoidable so as to avoid a damage of the supercapacitor, when the voltage value and the temperature value of the supercapacitor are extremely high. When the power capacity of the supercapacitor decreases, the alarm emits the warning lights so that the user replaces the supercapacitor immediately.

### BRIEF DESCRIPTION OF THE DRAWINGS

FIG. 1 is a circuit block diagram showing the application of a protection device for a power supply system of vehicle according to a preferred embodiment of the present invention.
FIG. 2 is a circuit block diagram of the protection device for the power supply system of the vehicle according to the preferred embodiment of the present invention.
FIG. 3 is a flow chart showing a protection method being executed by the protection device for the power supply system of the vehicle according to the preferred embodiment of the present invention.
FIG. 4 is a flow chart of an overcharge protection and a first over-temperature protection of FIG. 3 according to the preferred embodiment of the present invention.
FIG. 5 is a flow chart of a second over-temperature protection of FIG. 3 according to the preferred embodiment of the present invention.
FIG. 6 is a flow chart of a capacitance test of FIG. 3 according to the preferred embodiment of the present invention.

### DETAILED DESCRIPTION OF THE PREFERRED EMBODIMENTS

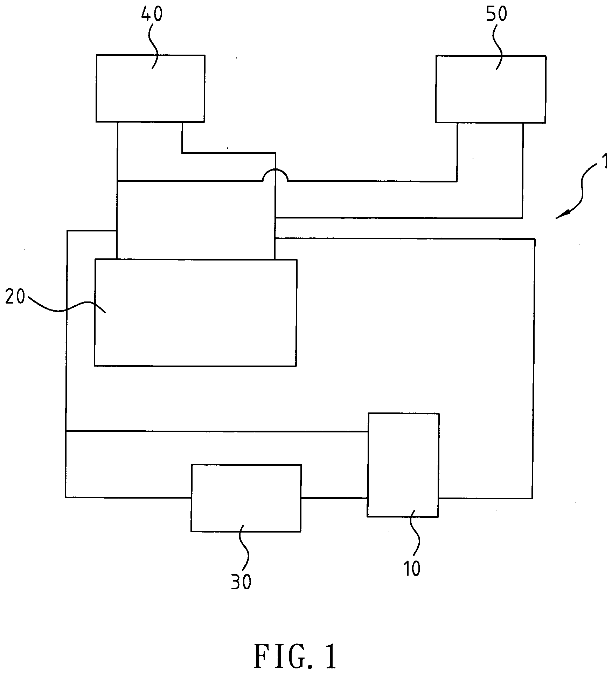

With reference to FIG. 1, a protection device (10) for a supercapacitor according to a preferred embodiment of the present invention is mounted on a power supply system (1) of vehicle, and the power supply system (1) includes a rechargeable battery (20), the supercapacitor (30), and a power generator (40). The rechargeable battery (20) is a rechargeable lead-acid battery or a rechargeable lithium battery, and the rechargeable battery (20) is in connection with the supercapacitor (30) in parallel so that the rechargeable battery (20) and the supercapacitor (30) supply power to a motor and electrical equipment (50) (such as a mobile computer, audio equipment, and an air conditioner) of the vehicle. The power generator (40) is coupled with the rechargeable battery (20) and the supercapacitor (30) and is applied to supply power to the rechargeable battery (20) and the supercapacitor (30), wherein the rechargeable battery (20) is configured to supply the power to the supercapacitor (30). The protection device (10) is located in a charging path of the supercapacitor (30) and is electrically connected with a negative electrode of the rechargeable battery (20) and a negative electrode of the supercapacitor (30) so as to control power charging and discharging of the supercapacitor (30). The protection device (10) is electrically connected with a positive electrode of the rechargeable battery (20) so as to detect a voltage value of the rechargeable battery (20), thus distinguishing starting or stopping of an engine of the vehicle.

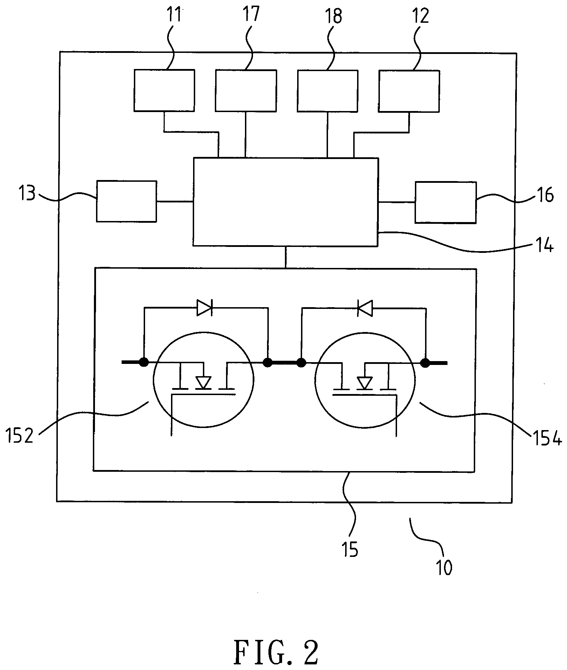

Referring to FIG. 2, the protection device (10) of the present invention comprises a first voltage detector (11), a second voltage detector (12), a temperature detector (13), a processing unit (14), a control unit (15), a communication unit (16), a battery judging unit (17), and an alarm (18), wherein the first voltage detector (11), the second voltage detector (12), the temperature detector (13), the control unit (15), the communication unit (16), the battery judging unit (17), and the alarm (18) are coupled with the processing unit (14). The first voltage detector (11) and the battery judging unit (17) are coupled with the rechargeable battery (20), the first voltage detector (11) is configured to detect and send the voltage value of the rechargeable battery (20) to the processing unit (14). The battery judging unit (17) is configured to detect and judge a type and a specification of the rechargeable battery (20) (such as the lead-acid battery or the rechargeable lithium battery), and the battery judging unit (17) sends a judged signal to the processing unit (14) so as to set a relaxation voltage of the rechargeable battery (20). The second voltage detector (12) is coupled with the supercapacitor (30) to detect and send a voltage value of the supercapacitor (30) to the processing unit (14). The temperature detector (12) is coupled with the supercapacitor (30) to detect and send a temperature value of the supercapacitor (30) to the processing unit (14), wherein the processing unit (14) is a microprocessor and is configured to send a control signal to the control unit (15) based on the voltage value and the temperature value of the supercapacitor (30) so that the control unit (15) controls a circuit on/off between the negative electrode of the rechargeable battery (20) and the negative electrode of the supercapacitor (30), thus controlling the charging and the discharging of the supercapacitor (30). The communication unit (16) is a Bluetooth communicator and is configured to send and receive a Bluetooth signal, wherein the processing unit (14) sends the Bluetooth signal to an external communication device (not shown) via the communication unit (16) so that a user operates the protection device, wherein the external communication device is a handheld communication device or other communication devices, and the external communication device includes an application program for controlling the protection device, and the alarm (18) is a light-emitting diode (LED) warning lamp.

The control unit (15) includes a first transistor (152) and a second transistor (154) which are connected in series, and a back surface of the first transistor (152) contacts with a back surface of the second transistor (154), wherein the first transistor (152) and the second transistor (154) are Metal-Oxide-Semiconductor Field-Effect Transistor (MOSFET), and a source of the first transistor (152) is electrically connected with the rechargeable battery (20), wherein a source of the second transistor (154) is electrically connected with the supercapacitor (30), and a drain of the first transistor (152) is electrically connected with a drain of the second transistor (154), such that the control unit (15) controls the supercapacitor (30) to not charge and discharge or to charge and discharge.

When the first transistor (152) and the second transistor (154) are electrically conductive in a unidirectional power path (i.e. in a completely off mode), the supercapacitor (30) does not discharge and receives the power. When the first transistor (152) and the second transistor (154) are electrically conductive in a two-way power path (i.e. in a completely on mode), the supercapacitor (30) discharges and receives the power. When the first transistor (152) is electrically conductive in the two-way power path and the second transistor (154) is in the unidirectional power path (in other words, the first transistor (152) and the second transistor (154) are in a discharging mode), the supercapacitor (30) discharges and does not receive the power.

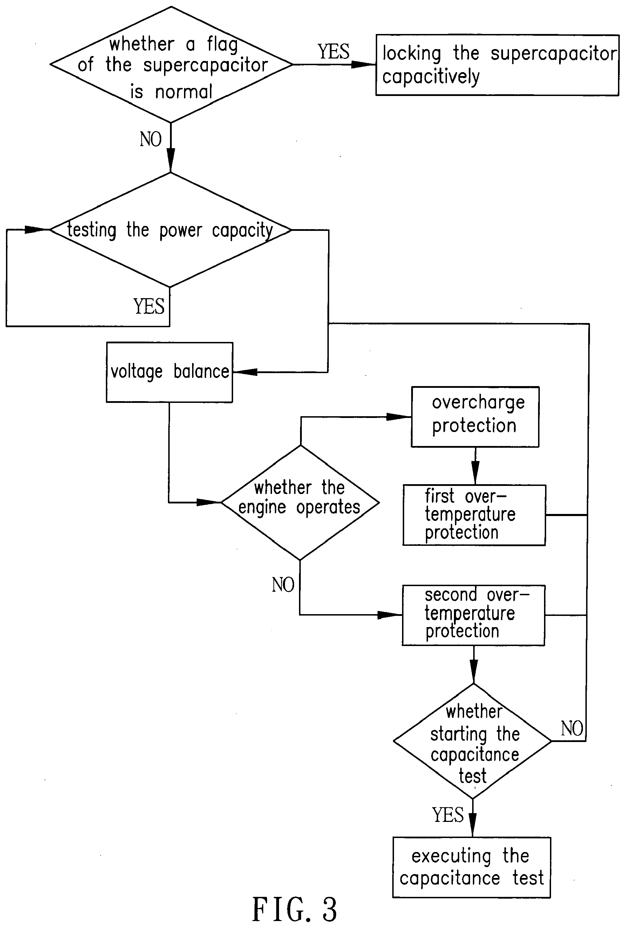

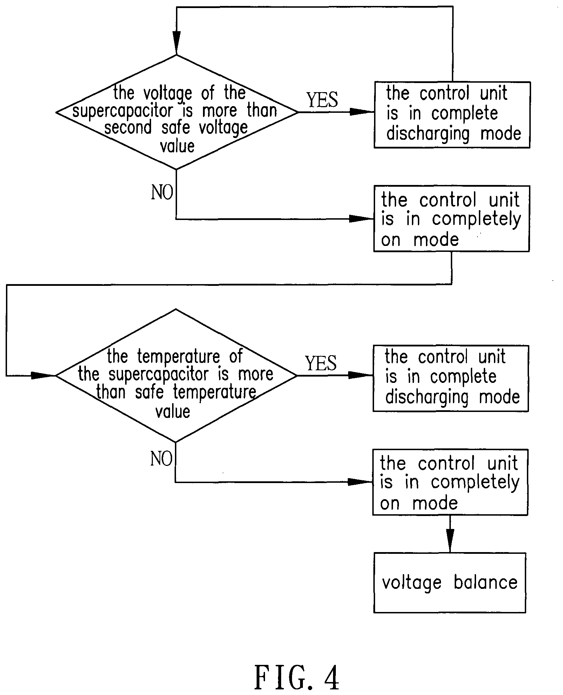

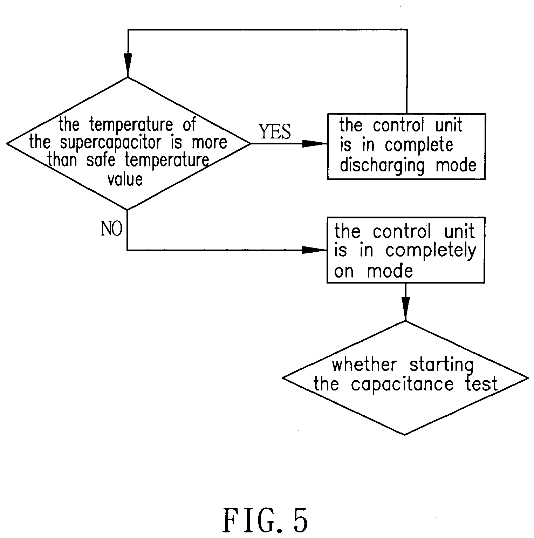

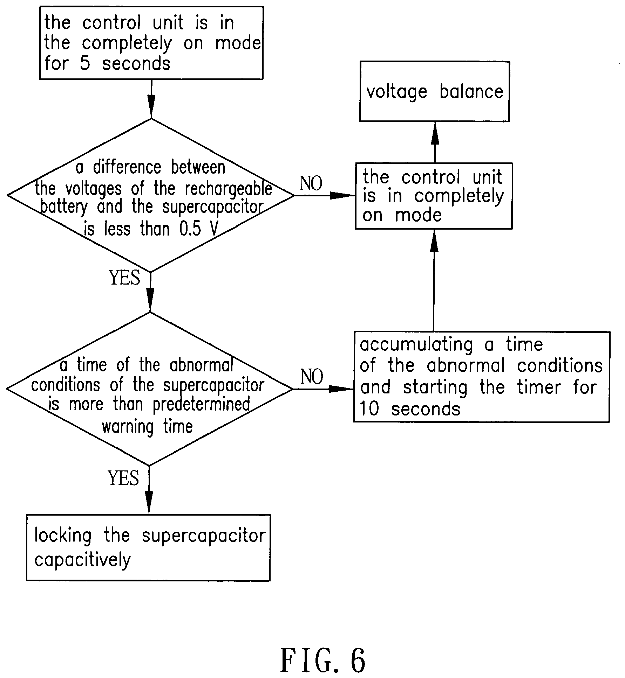

As shown in FIGS. 1-3, a protection method for the supercapacitor of the present invention is executed by the protection device (30) and comprises steps of:
1) pre-checking the supercapacitor, wherein the control unit (15) is in the completely off mode so that the supercapacitor (30) does not charge and discharge, and the processing unit (14) judges whether the supercapacitor (30) is normal based on a flag of the supercapacitor (30), wherein the flag of the supercapacitor (30) is configured to execute a capacitance test as following description;
   wherein when the supercapacitor (30) is abnormal, the processing unit (14) sends the control signal to the control unit (15) and the alarm (18) so as to execute a capacitive lock of the supercapacitor (30), and the control unit (15) is in the completely off mode so that the supercapacitor (30) does not charge and discharge, and the alarm (18) emits warning lights so that the supercapacitor (30) is maintained or is replaced;
   wherein when the supercapacitor (30) is normal, a power capacity of the supercapacitor (30) is tested;
2) testing the power capacity of the supercapacitor (30), wherein the processing unit (14) compares the voltage value of the supercapacitor (30) detected by the second voltage detector (11) with a first safe voltage value; when the voltage value of the supercapacitor (30) is less than the first safe voltage value, the voltage value of the supercapacitor (30) is detected and is compared with the first safe voltage value successively, when the voltage value of the supercapacitor (30) is equal to or is more than the first safe voltage value, the processing unit (14) sets the relaxation voltage and executes a voltage balance based on the type and the specification of the rechargeable battery (such as the lead-acid battery or the rechargeable lithium battery);
   wherein the first safe voltage is determined according to a withstand current of each of the first transistor (152) and the second transistor (154) and a voltage difference between the rechargeable battery (20) and the supercapacitor (30);
3) sending the control signal from the processing unit (14) to the control unit (15), wherein the control unit (15) is in the completely on mode so that the rechargeable battery (20) and the supercapacitor (30) charge and discharge to each other so as to produce the voltage balance between the rechargeable battery (20) and the supercapacitor (30);
4) judging whether an engine is running, wherein after the voltage balance produces between the rechargeable battery (20) and the supercapacitor (30), the processing unit (14) compares the voltage value of the rechargeable battery (20) detected by the first voltage detector (11) with the relaxation voltage;
   wherein when the voltage value of the rechargeable battery (20) is more than the relation voltage, the engine is running to execute an overcharge protection; when the voltage value of the rechargeable battery (20) is less than the relation voltage, the engine stops to execute a second over-temperature protection;
5) executing the overcharge protection, as illustrated in FIGS. 3 and 4, when the voltage value of the supercapacitor (30) is more than a second safe voltage value, the processing unit (14) sends the control signal to the control unit (15) so that the control unit (15) is in a complete discharging mode, wherein the supercapacitor (30) discharges and does not receive the power so as to avoid a damage of the supercapacitor (30), when the voltage value of the supercapacitor (30) is more than a withstand voltage value of a capacitance, the voltage value of the supercapacitor (30) is compared with the second safe voltage value;
   when the voltage value of the supercapacitor (30) is equal to or is less than the second safe voltage value, the control unit (15) is in the completely on mode, the supercapacitor (30) charges and discharges, and a first over-temperature protection is executed, wherein the second safe voltage value is determined based on the specification of the supercapacitor (30), and when the vehicle is a small car, a power supply system of the small car has the supercapacitor (30), and a safe voltage value of the supercapacitor 14.2 V;
6) executing the first over-temperature protection, as shown in FIGS. 3-4, wherein when the temperature value of the supercapacitor (30) is more than a safe temperature value, the processing unit (14) sends the control signal to the control unit (15), and the control unit (15) is in the complete discharging mode, wherein the supercapacitor (30) discharges and does not receive the power so as to avoid a damage of the supercapacitor (30), and the temperature value of the supercapacitor (30) is compared with the safe temperature value, when the temperature of the supercapacitor (30) is extremely high;
   when the temperature value of the supercapacitor (30) is equal to or is less than the safe temperature value, the processing unit (14) sends the control signal to the control unit (15), wherein the control unit (15) is in the completely on mode, and the supercapacitor (30) discharges and charges so as to execute the voltage balance;
   wherein the safe temperature value is determined according to the specification of the supercapacitor (30), the vehicle is the small car, and the safe temperature value of the supercapacitor of the power supply system of the small car is 55 °C;
7) executing the second over-temperature protection, as illustrated in FIGS. 3-5, wherein when the engine stops and the temperature value of the supercapacitor (30) is more than the safe temperature value, the processing unit (14) sends the control signal to the control unit (15), the control unit (15) is in the complete discharging mode, and the supercapacitor (30) discharges and does not receive the power so as to avoid the damage of the supercapacitor (30), and the temperature value of the supercapacitor (30) is compared with the safe temperature value when the temperature of the supercapacitor (30) is extremely high;
   wherein when the temperature value of the supercapacitor (30) is equal to or is less than the safe temperature value, the processing unit (14) sends the control signal to the control unit (15), the control unit (15) is in the completely on mode, and the supercapacitor (30) charges and discharges;
8) determining whether executing the capacitance test, wherein when the temperature of the supercapacitor (30) is less than or is equal to the safe temperature value, the control unit (15) is in the completely on mode, and the processing unit (14) starts a timer and detects whether the engine is running;
   wherein when the engine stops for a period of predetermined starting time, the capacitance test is executed, wherein the starting time is two hours or is more than or is less than two hours;
   wherein when a stopping time of the engine is less than the starting time, the voltage balance is executed;
   wherein when the engine stops, the user sends the control signal to the communication unit (16) by ways of the external communication device (not shown) which includes the application program for controlling the protection device (10), the communication device (16) sends the control signal to the processing unit (14) to execute the capacitance test, wherein the stopping time of the engine is not limited by the starting time;
9) executing the capacitance test, wherein in the capacitance test, the power capacity of the supercapacitor (30) is tested as follows:
   as shown in FIGS. 3-6, the processing unit (14) sends the control signal to the control unit (15) so that the voltage value of the rechargeable battery (20) is detected and compared with the voltage value of the supercapacitor (30) after the control unit (15) is in the completely off mode for 5 seconds, wherein a difference between the voltage value of the rechargeable battery (20) and the voltage value of the supercapacitor (30) is a voltage difference value;
   when the voltage difference value is less than or is equal to 0.5 V, the processing unit (14) sends the control signal to the control unit (15), and the control unit (15) is in the completely on mode so as to stop the capacitance test and to execute the voltage balance;
   when the voltage difference value is more than 0.5 V, the processing unit (14) records abnormal conditions, and a time of the abnormal conditions is accumulated and is compared with a predetermined warning time, wherein the predetermined warning time is 5;
   wherein when the time of the abnormal conditions is less than or is equal to the predetermined warning time, the control unit (15) is in the completely on mode after the processing unit (14) starts the timer for (10) seconds so as to stop the capacitance test and to execute the voltage balance;
   wherein when the time of the abnormal conditions is more than the predetermined warning time, the processing unit (14) records the flag of the supercapacitor (30) is abnormal and sends the control signal to the control unit (15) and the alarm (18) so as to execute the capacitive lock of the supercapacitor (30), and the control unit (15) is in the completely off mode continuously, wherein the supercapacitor (30) is locked capacitively to not charge or discharge, and the alarm (18) emits the warning lights so that the supercapacitor (30) is maintained and replaced.

Thereby, when the protection method is executed by using the protection device (10), the overcharge protection, the first over-temperature protection, and the second over-temperature protection are executed, wherein when the voltage value of the supercapacitor (30) is more than the second safe voltage value, the control unit (15) controls the supercapacitor (30) to discharge and not charge, thus avoiding increasing of the voltage value of the supercapacitor (30). Preferably, when the supercapacitor (30) discharges, the voltage value of the supercapacitor (30) is decreased. When the temperature value of the supercapacitor (30) is more than the safe temperature value, the control unit (15) controls the supercapacitor (30) to discharge and not charge so as to avoid a raising of the temperature value of the supercapacitor (30) and to decrease the temperature value of the supercapacitor (30). Accordingly, the protection device (10) protects the supercapacitor (30) effectively to avoid the damage of the supercapacitor (30) when the voltage and the temperature of the supercapacitor (30) are extremely high. When the power capacity of the supercapacitor (30) decreases, the alarm emits the warning lights so that the user replaces the supercapacitor (30).

The battery judging unit (17) is selectively provided on or is not provided on the protection device (10). For example, when the battery judging unit (17) is not provided on the protection device (10) and the protection device (10) executes the protection method, the relaxation voltage of the rechargeable battery (20) is set by the processing unit (14), and the rechargeable battery (20) or the protection device (10) is fixed based on the type and the specification of the rechargeable battery (20).

While the preferred embodiments of the invention have been set forth for the purpose of disclosure, modifications of the disclosed embodiments of the invention as well as other embodiments thereof may occur to those skilled in the art. Accordingly, the appended claims are intended to cover all embodiments which do not depart from the spirit and scope of the invention

## Claims

1. A protection device (10) for a supercapacitor (30) of a power supply system (1) of vehicle, the power supply system (1) including a rechargeable battery (20), the supercapacitor (30), and a power generator (40), the rechargeable battery (20) being in connection with the supercapacitor (30) in parallel, the power generator (40) being coupled with the rechargeable battery (20) and the supercapacitor (30), and the protection device (10) being coupled with the rechargeable battery (20) and the supercapacitor (30); **characterized in that**
the protection device (10) comprises a first voltage detector (11), a second voltage detector (12), a temperature detector (13), a processing unit (14), a control unit (15), a communication unit (16), and an alarm (18), wherein the first voltage detector (11), the second voltage detector (12), the temperature detector (13), the control unit (15), the communication unit (16), and the alarm (18) are coupled with the processing unit (14), wherein the first voltage detector (11) is coupled with the rechargeable battery (20) to detect and send a voltage value of the rechargeable battery (20) to the processing unit (14), the second voltage detector (12) is coupled with the supercapacitor (30) to detect and send a voltage value of the supercapacitor (30) to the processing unit (14), wherein the temperature detector (12) is coupled with the supercapacitor (30) to detect and send a temperature value of the supercapacitor (30) to the processing unit (14), wherein the processing unit (14) is a microprocessor and is configured to send a control signal to the control unit (15) based on the voltage value and the temperature value of the supercapacitor (30) so that the control unit (15) controls a charging and a discharging of the supercapacitor (30), wherein the communication unit (16) is a Bluetooth communicator and is configured to send and receive a Bluetooth signal, and the processing unit (14) sends the Bluetooth signal to an external communication device via the communication unit (16), wherein and the alarm (18) is a light-emitting diode (LED) warning lamp;
wherein the control unit (15) includes a first transistor (152) and a second transistor (154) which are connected in series, and a back surface of the first transistor (152) contacts with a back surface of the second transistor (154), wherein the first transistor (152) and the second transistor (154) are Metal-Oxide-Semiconductor Field-Effect Transistor (MOSFET).

2. The protection device (10) as claimed in claim 1 further comprising a battery judging unit (17), **characterized in that** the battery judging unit (17) is coupled with the processing unit (14), and the battery judging unit (17) is configured to detect and judge a type and a specification of the rechargeable battery (20), and the battery judging unit (17) sends a judged signal to the processing unit (14) so as to set a relaxation voltage of the rechargeable battery (20).

3. A protection method executed by the protection device (10) as claimed in claim 1 comprising steps of:
1) pre-checking the supercapacitor (30), wherein the control unit (15) is in a completely off mode, and the processing unit (14) judges whether the supercapacitor (30) is normal based on a flag of the supercapacitor (30);
wherein when the supercapacitor (30) is abnormal, the control unit (15) is in the completely off mode, and the alarm (18) emits warning lights; when the supercapacitor (30) is normal, a power capacity of the supercapacitor (30) is tested;
2) testing the power capacity of the supercapacitor (30), wherein the voltage value of the supercapacitor (30) is compared with a first safe voltage value; when the voltage value of the supercapacitor (30) is less than the first safe voltage value, the voltage value of the supercapacitor (30) is detected and is compared with the first safe voltage value successively; when the voltage value of the supercapacitor (30) is equal to or is more than the first safe voltage value, a voltage balance is executed;
3) producing the voltage balance, wherein the control unit (15) is in a complete on mode, and the rechargeable battery (20) and the supercapacitor (30) charge and discharge to each other, so as to produce the voltage balance;
4) judging whether an engine is running, wherein the voltage value of the rechargeable battery (20) is compared with the relaxation voltage of the rechargeable battery (20);
wherein when the voltage value of the rechargeable battery (20) is more than the relation voltage, the engine is running to execute an overcharge protection; when the voltage value of the rechargeable battery (20) is less than the relation voltage, the engine stops to execute a second over-temperature protection;
5) executing the overcharge protection, wherein when the voltage value of the supercapacitor (30) is more than a second safe voltage value, the control unit (15) is in a complete discharging mode, and the voltage value of the supercapacitor (30) is compared with the second safe voltage value continuously; when the voltage value of the supercapacitor (30) is equal to or is less than the second safe voltage value, the control unit (15) is in the completely on mode, and a first over-temperature protection is executed;
6) executing the first over-temperature protection, wherein when the temperature value of the supercapacitor (30) is more than a safe temperature value, the control unit (15) is in the complete discharging mode, the temperature value of the supercapacitor (30) is compared with the safe temperature value; when the temperature value of the supercapacitor (30) is equal to or is less than the safe temperature value, the control unit (15) is in the completely on mode, and the voltage balance is executed;
7) executing the second over-temperature protection, wherein when the temperature value of the supercapacitor (30) is more than the safe temperature value, the control unit (15) is in the complete discharging mode, the temperature value of the supercapacitor (30) is compared with the safe temperature value successively; when the temperature value of the supercapacitor (30) is equal to or is less than the safe temperature value, the control unit (15) is in the completely on mode;
8) determining whether executing the capacitance test, wherein when the temperature of the supercapacitor (30) is less than or is equal to the safe temperature value, the control unit (15) is in the completely on mode, and the processing unit (14) starts a timer and detects whether the engine is running;
wherein when the engine stops for a period of predetermined starting time, the capacitance test is executed;
wherein when a stopping time of the engine is less than the starting time, the voltage balance is executed;
9) executing the capacitance test, wherein the voltage value of the rechargeable battery (20) is compared with the voltage value of the supercapacitor (30) after the control unit (15) is in the completely off mode for 5 seconds, and a difference between the voltage value of the rechargeable battery (20) and the voltage value of the supercapacitor (30) is a voltage difference value;
wherein when the voltage difference value is less than or is equal to 0.5 V, the control unit (15) is in the completely on mode so as to stop the capacitance test and to execute the voltage balance;
wherein when the voltage difference value is more than 0.5 V, the processing unit (14) records abnormal conditions, and a time of the abnormal conditions is accumulated and is compared with a predetermined warning time;
wherein when the time of the abnormal conditions is less than or is equal to the predetermined warning time, the control unit (15) is in the completely on mode after the processing unit (14) starts the timer for (10) seconds so as to stop the capacitance test and to execute the voltage balance; and
wherein when the time of the abnormal conditions is more than the predetermined warning time, the processing unit (14) records the flag of the supercapacitor (30) is abnormal, the control unit (15) is in the completely off mode continuously, and the alarm (18) emits the warning lights.

4. The protection device (10) as claimed in claim 3, **characterized in that** when the engine stops, the control signal is sent to the communication unit (16) by ways of the external communication device to execute the capacitance test.
